# EUROPÄISCHE PATENTANMELDUNG

(11) **EP 3 029 494 A1**
(43) Veröffentlichungstag der Anmeldung: **08.06.2016**
(21) Anmeldenummer: 14195860.3
(22) Anmeldetag: 02.12.2014
(51) Int. Cl.: G01V 8/20

(54) **Optoelektronischer Sensor**

(71) Anmelder: SICK AG, 79183 Waldkirch (DE)
(72) Erfinder: Hammes, Dr. Markus, 79117 Freiburg (DE); Sigmund, Jörg, 79100 Freiburg (DE)
(74) Vertreter: Rieger, Daniel-Stephan

(57) **Zusammenfassung**

Optoelektronischer Sensor zur Entfernungsmessung von Objekten (2) in einem Überwachungsbereich (4) nach einem Lichtlaufzeitverfahren, mit einem Lichtempfänger (5) zum Empfangen von Licht aus dem Überwachungsbereich (4) und zur Ausgabe von Empfangssignalen (10), und einer Auswerteeinheit (12) zum Bestimmen der Lichtlaufzeit aus den Empfangssignalen (10), wobei der Lichtempfänger (5) ein Bildsensor (6) ist mit einer Vielzahl von Lichtempfangselementen (8), welche in einer Matrix flächig angeordnet sind, vor wenigstens einem Lichtempfangselement (8) ein erstes optisches Element (14) angeordnet ist, wobei das erste optische Element (14) ein Filterelement (18) eines Filterarray (24) aufweist, wobei mindestens jeweils erste Filterelemente (20) und mindestens jeweils zweite Filterelemente (22) unterschiedliche optische Dämpfungen aufweisen und/oder das erste optische Element (14) eine Linse (28) einer Facettenoptik (26) aufweist, wobei die Facettenoptik (26) eine Vielzahl von Linsen (28) aufweist, wobei jeweils eine Linse (28) mindestens jeweils einem Lichtempfangselement (8) zugeordnet ist..

## Beschreibung

Die vorliegende Erfindung betrifft einen optoelektronischen Sensor zur Entfernungsmessung von Objekten in einem Überwachungsbereich nach einem Lichtlaufzeitverfahren nach dem Oberbegriff von Anspruch 1.

Nach dem Stand der Technik sind bereits lichtlaufzeitbasierende Kamerasensoren bzw. Bildsensoren bekannt. Diese Kamerasensoren weisen jedoch eine geringe Dynamik auf. Weiter weisen die Kamerasensoren in Verbindung mit einer Abbildungsoptik ein optisches Übersprechen zwischen benachbarten Bildbereichen auf. Diese Einschränkungen erschweren bisher den Einsatz von lichtlaufzeitbasierenden Kamerasensoren in der Sicherheitstechnik.

Ein für sicherheitstechnische Anwendungen besonders kritischer Fall sind Szenen, in denen ein dunkles Vordergrundobjekt im Bild seitlich an ein sehr helles Hintergrundobjekt angrenzt. Hier kann es durch Streulicht im Empfangsstrahlengang oder auch durch sogenannte Geisterbilder, die durch Mehrfachreflexionen in der Abbildungsoptik entstehen, passieren, dass auf einem Pixel Lichtanteile sowohl des Vordergrundobjekts als auch des benachbarten Hintergrundobjekts gemessen werden. Bei ungünstigen Intensitätsverhältnissen wird ein TOF-Bildsensor den Abstandswert des Hintergrundes auch dem Vordergrund zuordnen bzw. einen Zwischenwert ausgeben. Dieses Versetzen eines realen Objekts vom Sensor weg kann zu einem gefährlichen Ausfall der Detektionsfähigkeit führen und muss daher bei sicherheitstechnischen Anwendungen ausgeschlossen werden. Beispielsweise können je nach Aufnahme übersteuerte Bereiche im Bild auftreten. Aufgrund eines eingeschränkten Dynamikbereichs kann der Sensor bzw. eine Kamera in den übersteuerten Bereichen keine Entfernungsinformation mehr liefern. Gleichzeitig können diese übersteuerten Bereiche als Geisterbild an einer anderen Stelle des Bildsensors zu einem verfälschten Entfernungswert führen, da sich hier der Signalanteil des Geisterbildes mit dem Signal des eigentlichen Hintergrundes auf dem Bildsensor mischt. Der gleiche Effekt kann in anderen Szenen auch zu einer Verlängerung des Entfernungswertes führen.

Die Ursache dieses optischen Übersprechens zwischen benachbarten Bildbereichen kann auf die gemeinsame Nutzung eines einzelnen Empfangsstrahlengangs durch viele unterschiedliche Blickrichtungen zurückgeführt werden.

Die klassische optische Bilderzeugung nach diesem Prinzip hat zwar den Vorteil, dass das Bild ohne weitere Verarbeitung direkt gespeichert oder weiter verwendet werden kann und zudem durch eine einfache Anordnung makroskopischer Linsen herstellbar ist. Nachteile sind jedoch neben dem großen Volumen der Abbildungsoptik aber eben auch die Anfälligkeit für Wechselwirkungen oder gegenseitige Störungen benachbarter Bildbereiche. Gerade diese Eigenschaft stört in Kombination mit TOF-Bildsensoren besonders.

Eine Aufgabe der Erfindung besteht darin, eine Dynamik eines lichtlaufzeitbasierenden Bildsensors zu verbessen und/oder ein optisches Übersprechen eines lichtlaufzeitbasierenden Bildsensors zwischen benachbarten Bildbereichen zu verbessern.

Die Aufgabe wird gemäß Anspruch 1 gelöst durch einen optoelektronischen Sensor zur Entfernungsmessung von Objekten in einem Überwachungsbereich nach einem Lichtlaufzeitverfahren, mit einem Lichtempfänger zum Empfangen von Licht aus dem Überwachungsbereich und zur Ausgabe von Empfangssignalen, und einer Auswerteeinheit zum Bestimmen der Lichtlaufzeit aus den Empfangssignalen, wobei der Lichtempfänger ein Bildsensor ist mit einer Vielzahl von Lichtempfangselementen, welche in einer Matrix flächig angeordnet sind, wobei vor wenigstens einem Lichtempfangselement ein erstes optisches Element angeordnet ist, wobei das erste optische Element ein Filterelement eines Filterarray aufweist, wobei mindestens jeweils erste Filterelemente und mindestens jeweils zweite Filterelemente unterschiedliche optische Dämpfungen aufweisen und/oder das erste optische Element eine Linse einer Facettenoptik aufweist, wobei die Facettenoptik eine Vielzahl von Linsen aufweist, wobei jeweils einer Linse mindestens jeweils ein Lichtempfangselement zugeordnet ist.

Ein lichtlaufzeitbasierender Bildsensor bzw. ein lichtlaufzeitbasierender ortsauflösender Lichtempfänger hat den Vorteil, hochwertige 3D-Daten mit einer hohen Wiederholrate aus dem Überwachungsbereich zu erfassen. Derartige Lichtempfänger bzw. Bildsensoren sind sehr preiswert und benötigen im Vergleich zu einem stereoskopischen Bildverfahren keine aufwändige Auswerteeinheit, sondern benötigen lediglich eine eher preiswerte Auswerteeinheit.

Die mit dem optoelektronischen Sensor ermittelten 3D-Daten können vielseitig für Automatisierungs- und Sicherheitsanwendungen eingesetzt werden. Beispielsweise zur Überwachung eines gefährlichen Bereichs um eine Maschine oder zur Vermessung und Anwesenheitskontrolle von Objekten.

Das Filterarray ist ein zusätzliches optisches Element, das sich unmittelbar über dem Bildsensor befindet und die Aufgabe hat, das Licht abhängig von der Position auf dem Bildsensor unterschiedlich abzuschwächen bzw. unterschiedlich zu dämpfen. Die Lichtempfangselemente, bzw. Bildpunkte bzw. Pixel in einer lokalen Nachbarschaft werden dadurch für unterschiedliche Helligkeitsbereiche verwendet. Beispielsweise weisen die unterschiedlichen Filterelemente unterschiedliche Grauwerte auf.

Korrespondieren beispielsweise vier benachbarte Lichtempfangselemente mit Filterelementen verschiedener optischer Dichten bzw. verschiedener optischer Dämpfungen, so kann ein Dynamikbereich unabhängig von der Dynamik des Bildsensors selbst, um beispielsweise vier Dekaden vergrößert werden, je nachdem wie unterschiedlich die verschiedenen optischen Dichten der unterschiedlichen Filterelemente gewählt sind.

Gemäß der Erfindung erfolgt bei den Filterelementen ein Auflösungsverlust des Bildsensors, da zumindest jeweils zwei Lichtempfangselemente einen identischen Objektpunkt abbilden. Bei einer Anwendung im Sicherheitstechnikbereich, also bei sicheren Sensoren, welche bestimmten Sicherheitsnormen genügen, beispielsweise den Normen EN 61508 oder EN 61496 ist ein Auflösungsverlust hinnehmbar, jedoch keine Übersteuerung des Bildsensors. Eine Übersteuerung des Bildsensors wird aber gemäß der Erfindung durch die jeweiligen Filterelemente mit unterschiedlicher Dämpfung vermieden.

Eine Übersteuerung des Bildsensors würde zu einem Totalverlust der Bild- und Tiefeninformation führen, welche jedoch gemäß der Erfindung verhindert wird. Zwar könnte auch eine HDR-Aufnahme durch wiederholte Aufnahmen mit unterschiedlichen Belichtungszeiten durchgeführt werden, jedoch hat das den großen Nachteil einer großen Ansprechzeit. Weiter ist eine solche kombinierte Aufnahme mit unterschiedlichen Belichtungszeiten bei mobilen Anwendungen mit schnell bewegten Bildern oder Bildelementen ohnehin nicht möglich. Gemäß der Erfindung wird jedoch eine Übersteuerung des Bildsensors bei einer einzigen Aufnahme vermieden, wodurch eine kurze Ansprechzeit des Sensors resultiert. Gemäß der Erfindung ist es weiterhin möglich, sich bewegende Objekte aufzunehmen.

Durch die Facettenoptik mit einzelnen Linsen für mindestens ein Lichtempfangselement wird ein Übersprechen, also eine Abbildung unterschiedlicher Objektpunkte auf ein einziges Lichtempfangselement, vermieden. Dabei weist jede Linse der Facettenoptik eine eigene optische Achse auf. Die optischen Achsen der Linsen sind dabei parallel zueinander ausgerichtet. Die Linsen der Facettenoptik liegen dabei beispielsweise in einer gemeinsamen Ebene. Durch die Linsen der Facettenoptik erfolgt eine optische Kanaltrennung zwischen den der jeweiligen Linsen zugeordneten Lichtempfangselemente.

Die Facettenoptik mit den einzelnen Linsen hat den Vorteil, dass diese ein sehr kleines Volumen gegenüber einer klassischen einzigen großen Linse hat. Insbesondere ist die Facettenoptik flacher ausgebildet als eine einzige große Linse. Dadurch kann der optoelektronische Sensor selbst sehr viel kleiner bzw. kompakter ausgebildet werden.

Gemäß der Erfindung lassen sich sehr robuste, kleine und preiswerte optoelektronische Abstandssensoren herstellen. Eine Herstellung des Filterarrays in einem parallelen Prozess als Waferoptik und dem Bildsensor erlaubt eine integrierte Herstellung des optoelektronischen Sensors in einer großen Stückzahl in einem durchgängigen Prozess. Auch eine Kombination von Facettenoptik und Filterarray kann bei der Herstellung vorgesehen sein.

In Weiterbildung der Erfindung bildet mindestens ein erstes Filterelement und mindestens ein zweites Filterelement eine Gruppe. Das erste Filterelement ist dabei einem ersten Lichtempfangselement zugeordnet und das zweite Filterelement einem zweiten Lichtempfangselement. Die Lichtempfangselemente, die der Gruppe von Filterelementen zugeordnet sind, bilden einen Bildpunkt mit einem hochdynamischen Bereich, auch High-Dynamic-Rang-Pixel oder HDR-Pixel genannt. Dadurch kann ein optischer Dynamikbereich vergrößert werden. Zwar reduziert sich die nutzbare Auflösung des Bildsensors, jedoch sind die erhaltenden Entfernungsinformationen genauer und mit weniger Fehlern behaftet.

In Weiterbildung der Erfindung sind die Filterelemente einer Gruppe in einer Zeile und/oder einer Spalte angeordnet. Sind die Filterelemente nur jeweils in einer Zeile oder nur jeweils in einer Spalte angeordnet, so ist der Auflösungsverlust in jeweils einer Vorzugsrichtung vermieden und tritt nur in der Richtung auf, in der die Filterelemente in einer Gruppe angeordnet sind. Dadurch kann die optische Auflösung in einer Richtung beibehalten und zusätzlich ein hochdynamischer Bereich gebildet werden.

Sind die Filterelemente einer Gruppe in jeweils einer Zeile und jeweils einer Spalte angeordnet, so kann beispielsweise ein räumlich kompakter quadratischer oder rechteckiger Bereich für die Gruppe gebildet werden, so dass quasi verhältnismäßig größere Bildpunkte bzw. Pixel mit einem hochdynamischen Bereich gebildet werden. Jedoch sind auch andere Formen der Gruppen möglich. So ist es denkbar, dass die Filterelemente beispielsweise L-förmig angeordnet werden, wodurch der Auflösungsverlust im Vergleich zu rechteckigen oder quadratischen Strukturen vermieden wird.

Fertigungstechnisch können die Filterelemente linienweise, bereichsweise oder für jedes Lichtempfangselement individuell aufgebracht werden.

In Weiterbildung der Erfindung sind die Filterelemente einer Gruppe in einer rechteckigen Fläche aus mindestens vier Filterelementen angeordnet. Dadurch wird quasi ein flächenmäßig vierfach größerer Pixel gebildet, der jedoch durch die vier mit jeweils unterschiedlicher Dämpfung ausgebildeten Filterelementen eine vierfach höhere Dynamik bietet. Diese Lösung bietet den Vorteil, dass die Auflösung in jeweils senkrechten Richtungen zueinander lediglich halbiert ist, jedoch der Dynamikbereich gleichzeitig vervierfacht ist.

In Weiterbildung der Erfindung bilden mindestens zwei Lichtempfangselemente eine Lichtempfangselementgruppe, wobei jeweils eine einzige Linse der Facettenoptik jeweils einer Lichtempfangselementgruppe zugeordnet ist.

In Weiterbildung der Erfindung ist die Facettenoptik dazu ausgebildet, einen einzigen Objektpunkt auf mindestens zwei unterschiedliche Lichtempfangselemente abzubilden, wodurch eine redundante Abbildung erfolgt.

In diesem Fall können Abbildungsüberlappungsbereiche benachbarter getrennter Sichtbereiche vorgesehen werden. Damit liegen redundante Bildinformationen vor.

Dabei kann eine komplette Duplizierung von Bildbereichen vorgesehen sein.

Diese redundanten Bildinformationen erlauben eine wirksame Unterdrückung von Störeffekten. Für sicherheitstechnische Anwendungen ist dies besonders von Vorteil, da eine Testung zum Aufdecken von Lichtempfangselementfehlern bzw. Pixelfehlern, z. B. Hotpixeln oder Fix Pattern Noise erlaubt. Eine Blickrichtung eines Sichtbereichs ist durch die Lage und Form der zugehörigen Linse relativ zu dem korrespondierenden Lichtempfangselement festgelegt.

In Weiterbildung der Erfindung ist das erste optische Element eine Linse einer Facettenoptik, wobei die Facettenoptik eine Vielzahl von Linsen aufweist, wobei eine Linse genau einem Lichtempfangselement zugeordnet ist. Dadurch wird eine Eins-zu-eins-Zuordnung zwischen Linse und Lichtempfangselement realisiert. Dies ist von Vorteil bei großen Lichtempfangselementen bzw. Pixeln und eher geringen Auflösungen.

In Weiterbildung weist das Lichtempfangselement mindestens eine Einzelphotonenlawinendiode auf. Eine Einzelphotonenlawinendiode wird auch Single Photon Avalanche Diode bzw. SPAD genannt. Dabei kann das Lichtempfangselement auch durch ein Array von Einzelphotonenlawinendioden gebildet sein.

Die Detektionsfläche des Bildsensors weist dabei eine Vielzahl von Lichtempfangselementen bzw. Pixel auf, wobei jedes Lichtempfangselement mindestens eine Einzelphotonenlawinendiode bzw. Single Photon Avalanche Diode bzw. SPAD aufweist. Jede der Einzelphotonenlawinendioden ist mit der Auswerteeinheit direkt oder indirekt über weitere zwischengeschaltete Bauelemente verbunden. Die Auswerteeinheit ist dabei dazu ausgelegt, eine Entfernung zwischen dem Bildsensor bzw. dem optoelektronischen Sensor und den Objekten in dem Überwachungsbereich aufgrund der empfangenen Empfangssignale zu ermitteln.

Eine Einzelphotonenlawinendiode hat grundsätzlich die Eigenschaft, nach der Auslösung durch ein Photon eine gewisse Erholzeit zu benötigen, bis die SPAD wieder empfindlich ist. In dieser Totzeit kann das eigentliche Signal nicht erkannt werden, auch wenn der Pegel über dem Fremdlichtpegel liegt. Werden in dem SPAD-Bildsensor Bereiche unterschiedlicher Empfindlichkeit durch die Filterelemente geschaffen, kann erreicht werden, dass der Bildsensor detektionsfähig zu bleibt.

Mittels der Facettenoptik wird erreicht, die hohe Empfindlichkeit des SPAD-Arrays und die Bildinformation mit einer zusätzlichen Ortsauflösung zu verbinden.

In Weiterbildung der Erfindung ist vor dem Bildsensor ein schmalbandiges Interferenzfilter angeordnet. Durch das schmalbandige Interferenzfilter kann störendes Fremdlicht wirksam unterdrückt werden.

Weiter kann ein Lichtsender vorgesehen sein, mit welcher der Überwachungsbereich beleuchtet wird. Der Lichtsender kann eine Lichtquelle, beispielsweise eine Leuchtdiode, eine Leuchtdiodenlichtquelle, eine Laserdiode oder ein Laser sein. Das Licht wird dabei optional moduliert, zeitlich moduliert oder zyklisch gepulst ausgesendet. Die zeitliche Modulation kann hierbei kontinuierlich und/oder periodisch, beispielsweise sinusartig erfolgen. Es können auch Pulsgruppen zyklisch ausgesendet werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Abbildung nach dem Stand der Technik mit einem Geisterbildbereich;
- Figur 2: einen optoelektronischen Sensor mit einem Filterarray;
- Figur 3: einen optoelektronischen Sensor mit einer Facettenoptik;
- Figur 4: einen optoelektronischen Sensor mit einem Filterarray und einer Facettenoptik;
- Figur 5: eine Facettenoptik und ein Filterarray mit optischen Strahlengängen in einer Seitenansicht;
- Figur 6: eine weitere Facettenoptik und ein Filterarray mit optischen Strahlengängen in einer Seitenansicht;
- Figur 7: ein Filterarray in drei verschiedenen Ansichten;
- Figur 8: eine Facettenoptik in drei verschiedenen Ansichten;
- Figur 9: ein Filterarray und eine Facettenoptik in drei verschiedenen Ansichten;
- Figur 10: ein Filterarray, eine Facettenoptik und ein Bildsensor in drei verschiedenen Ansichten;
- Figur 11: ein Filterarray und eine Facettenoptik, wobei einem Filterelement vier Linsen zugeordnete sind;
- Figur 12: eine Abbildung des Bildsensors gemäß der Erfindung;
- Figur 13: ein Objekt, das durch den Bildsensor abgebildet werden soll;
- Figur 14: eine redundante Abbildung eines Objektes auf einem Bildsensor gemäß der Erfindung.

In den nachfolgenden Figuren sind identische Teile mit identischen Bezugszeichen versehen.

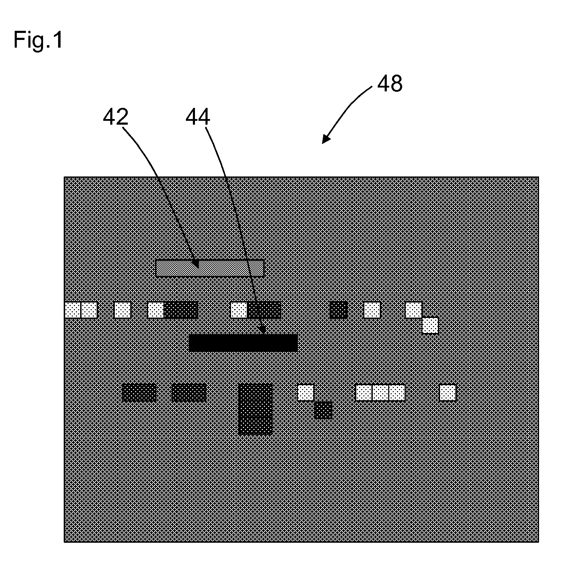

Figur 1 zeigt eine Abbildung 48 nach dem Stand der Technik mit einem Geisterbild 42 bzw. Geisterbildbereich. Das Bild ist mit einer konventionellen TOF-Kamera nach dem Stand der Technik aufgenommen worden, wobei ein herkömmliches Objektiv nach dem Stand der Technik eingesetzt wurde. In der Abbildung 48 ist ein übersteuerter Bereich 44 im Bildbereich aufgetreten. Aufgrund eines eingeschränkten Dynamikbereichs kann der Sensor bzw. eine Kamera in den übersteuerten Bereichen 44 keine Entfernungsinformation mehr liefern. Gleichzeitig wird dieser übersteuerter Bereich 44 als Geisterbild 42 bzw. Geisterbildbereich an einer anderen Stelle der Abbildung 48 des Bildsensors zu einem verfälschten Entfernungswert führen, da sich hier der Signalanteil des Geisterbildes 42 mit dem Signal des eigentlichen Hintergrundes auf dem Bildsensor mischt. Der gleiche Effekt kann in anderen Szenen auch zu einer Verlängerung des Entfernungswertes führen.

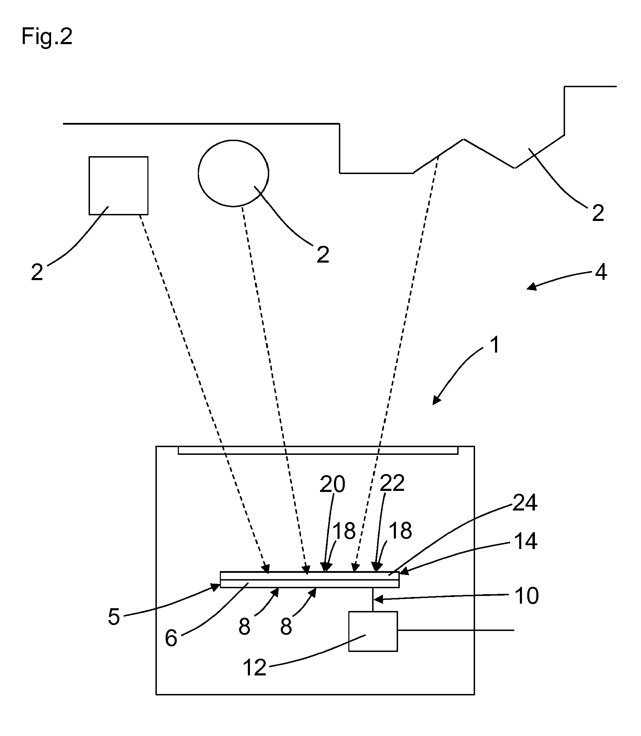

Figur 2 zeigt einen optoelektronischen Sensor 1 zur Entfernungsmessung von Objekten 2 in einem Überwachungsbereich 4 nach einem Lichtlaufzeitverfahren, mit einem Lichtempfänger 5 zum Empfangen von Licht aus dem Überwachungsbereich 4 und zur Ausgabe von Empfangssignalen 10, und einer Auswerteeinheit 12 zum Bestimmen der Lichtlaufzeit aus den Empfangssignalen 10, wobei der Lichtempfänger 5 ein Bildsensor 6 ist mit einer Vielzahl von Lichtempfangselementen 8, welche in einer Matrix flächig angeordnet sind, wobei vor wenigstens einem Lichtempfangselement 8 ein erstes optisches Element 14 angeordnet ist, wobei das erste optische Element 14 ein Filterelement 18 eines Filterarray 24 aufweist, wobei mindestens jeweils erste Filterelemente 20 und mindestens jeweils zweite Filterelemente 22 unterschiedliche optische Dämpfungen aufweisen.

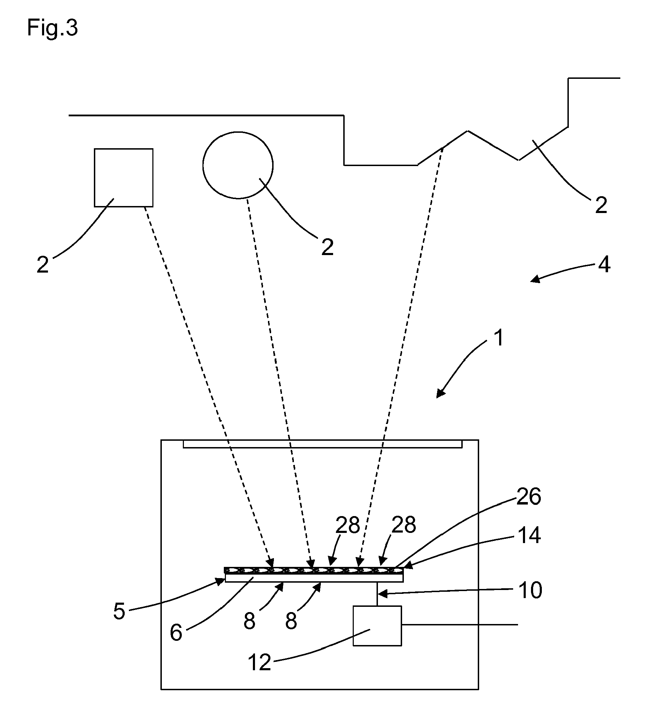

Figur 3 zeigt einen optoelektronischen Sensor 1 zur Entfernungsmessung von Objekten 2 in einem Überwachungsbereich 4 nach einem Lichtlaufzeitverfahren, mit einem Lichtempfänger 5 zum Empfangen von Licht aus dem Überwachungsbereich 4 und zur Ausgabe von Empfangssignalen 10, und einer Auswerteeinheit 12 zum Bestimmen der Lichtlaufzeit aus den Empfangssignalen 10, wobei der Lichtempfänger 5 ein Bildsensor 6 ist mit einer Vielzahl von Lichtempfangselementen 8, welche in einer Matrix flächig angeordnet sind, wobei vor wenigstens einem Lichtempfangselement 8 ein erstes optisches Element 14 angeordnet ist, wobei das erste optische Element 14 eine Linse 28 einer Facettenoptik 26 aufweist, wobei die Facettenoptik 26 eine Vielzahl von Linsen 28 aufweist, wobei jeweils eine Linse 28 mindestens jeweils einem Lichtempfangselement 8 zugeordnet ist.

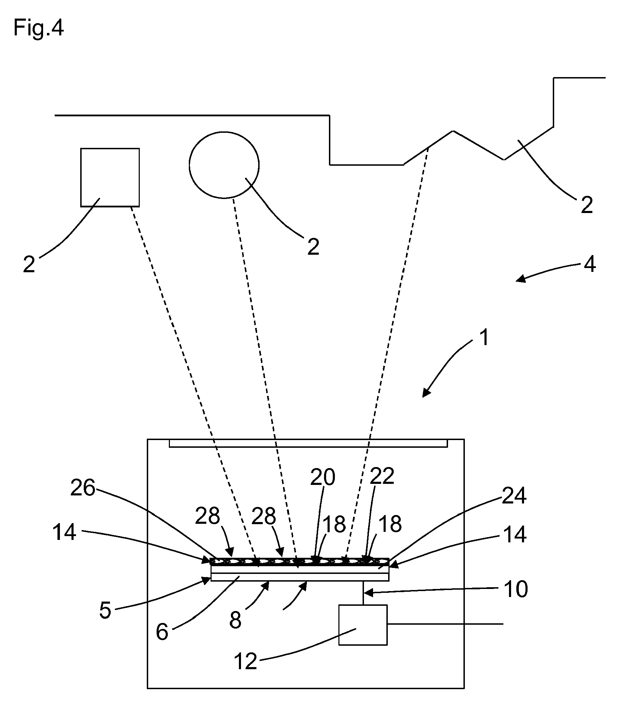

Figur 4 zeigt einen optoelektronischen Sensor 1 zur Entfernungsmessung von Objekten 2 in einem Überwachungsbereich 4 nach einem Lichtlaufzeitverfahren, mit einem Lichtempfänger 5 zum Empfangen von Licht aus dem Überwachungsbereich 4 und zur Ausgabe von Empfangssignalen 10, und einer Auswerteeinheit 12 zum Bestimmen der Lichtlaufzeit aus den Empfangssignalen 10, wobei der Lichtempfänger 5 ein Bildsensor 6 ist mit einer Vielzahl von Lichtempfangselementen 8, welche in einer Matrix flächig angeordnet sind, wobei vor wenigstens einem Lichtempfangselement 8 ein erstes optisches Element 14 angeordnet ist, wobei das erste optische Element 14 ein Filterelement 18 eines Filterarray 24 aufweist, wobei mindestens jeweils erste Filterelemente 20 und mindestens jeweils zweite Filterelemente 22 unterschiedliche optische Dämpfungen aufweisen und das erste optische Element 14 eine Linse 28 einer Facettenoptik 26 aufweist, wobei die Facettenoptik 26 eine Vielzahl von Linsen 28 aufweist, wobei jeweils eine Linse 28 mindestens jeweils einem Lichtempfangselement 8 zugeordnet ist. Das Filterarray 24 ist dabei zwischen den Lichtempfangselementen 8 und der Facettenoptik 26 angeordnet.

Die mit dem optoelektronischen Sensor 1 ermittelten 3D-Daten können vielseitig für Automatisierungs- und Sicherheitsanwendungen eingesetzt werden. Beispielsweise zur Überwachung eines gefährlichen Bereichs um eine Maschine oder zur Vermessung und Anwesenheitskontrolle von Objekten.

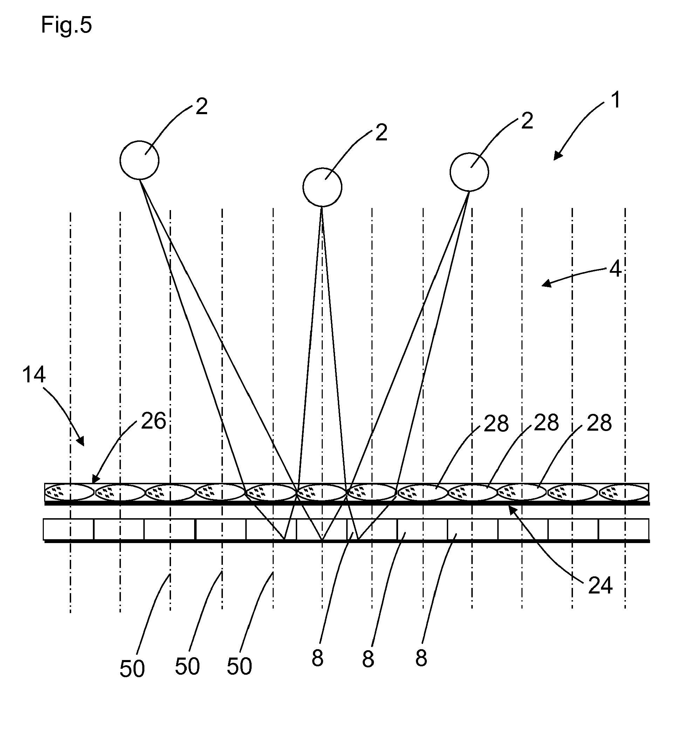

Figur 5 zeigt eine Facettenoptik 26 und ein Filterarray 24 mit optischen Strahlengängen in einer Seitenansicht. Dabei weist jede Linse 28 der Facettenoptik 26 eine eigene optische Achse 50 auf. Die optischen Achsen 50 der Linsen 28 sind dabei beispielsweise parallel zueinander ausgerichtet. Die Linsen 28 der Facettenoptik 26 liegen dabei beispielsweise in einer gemeinsamen Ebene. Durch die Linsen 28 der Facettenoptik 26 erfolgt eine optische Kanaltrennung zwischen dem der jeweiligen Linse 28 zugeordneten mindestens einem Lichtempfangselement 8.

Beispielsweise ist das erste optische Element 14 eine Linse 28 einer Facettenoptik 26, wobei die Facettenoptik 26 eine Vielzahl von Linsen 28 aufweist, wobei je eine Linse 28 genau je einem einzigen Lichtempfangselement 8 zugeordnet ist. Dadurch wird eine Eins-zu-eins-Zuordnung zwischen Linse 28 und Lichtempfangselement 8 realisiert.

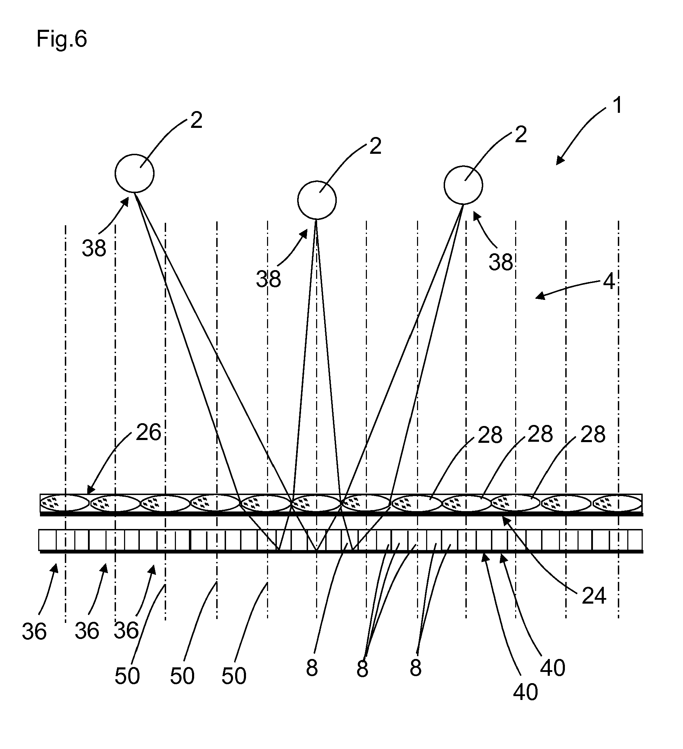

Beispielsweise bilden gemäß Figur 6 mindestens zwei Lichtempfangselemente 8 eine Lichtempfangselementgruppe 36, wobei jeweils eine einzige Linse 28 der Facettenoptik 26 jeweils einer Lichtempfangselementgruppe 36 zugeordnet ist. Dabei ist die Facettenoptik 26 dazu ausgebildet, einen einzigen Objektpunkt 38 auf mindestens zwei unterschiedliche Lichtempfangselemente 8 abzubilden, wodurch eine redundante Abbildung erfolgt.

In diesem Fall können Abbildungsüberlappungsbereiche benachbarter getrennter Sichtbereiche vorgesehen werden. Damit liegen redundante Bildinformationen vor. Diese redundanten Bildinformationen erlauben eine wirksame Unterdrückung von Störeffekten.

Die Lichtempfangselemente 8 können optional auch Einzelphotonenlawinendioden 40 sein. Die Detektionsfläche des Bildsensors 6 weist dabei eine Vielzahl von Lichtempfangselementen 8 bzw. Pixel auf, wobei jedes Lichtempfangselement 8 mindestens eine Einzelphotonenlawinendiode 40 bzw. Single Photon Avalanche Diode bzw. SPAD aufweist. Somit kann ein Lichtempfangselement 8 gemäß der Erfindung auch ein Array von Einzelphotonenlawinendioden 40 aufweisen. Jeder der Einzelphotonenlawinendioden 40 ist mit der Auswerteeinheit 12 direkt oder indirekt über weitere zwischengeschaltete Bauelemente verbunden. Die Auswerteeinheit 12 ist dabei dazu ausgelegt, eine Entfernung zwischen dem Bildsensor 6 bzw. dem optoelektronischen Sensor 1 und den Objekten 2 in dem Überwachungsbereich 4, aufgrund der empfangenen Empfangssignale 10 zu ermitteln.

Optional ist vor dem Bildsensor 6 ein schmalbandiges Interferenzfilter angeordnet. Durch das schmalbandige Interferenzfilter kann störendes Fremdlicht wirksam unterdrückt werden.

Weiter kann ein Lichtsender vorgesehen sein, mit welcher der Überwachungsbereich 4 beleuchtet wird. Der Lichtsender kann eine Lichtquelle, beispielsweise eine Leuchtdiode, eine Leuchtdiodenlichtquelle, eine Laserdiode oder ein Laser sein. Das Licht wird dabei optional moduliert, zeitlich moduliert oder zyklisch gepulst ausgesendet. Die zeitliche Modulation kann hierbei kontinuierlich und/oder periodisch, beispielsweise sinusartig erfolgen. Es können auch Pulsgruppen zyklisch ausgesendet werden.

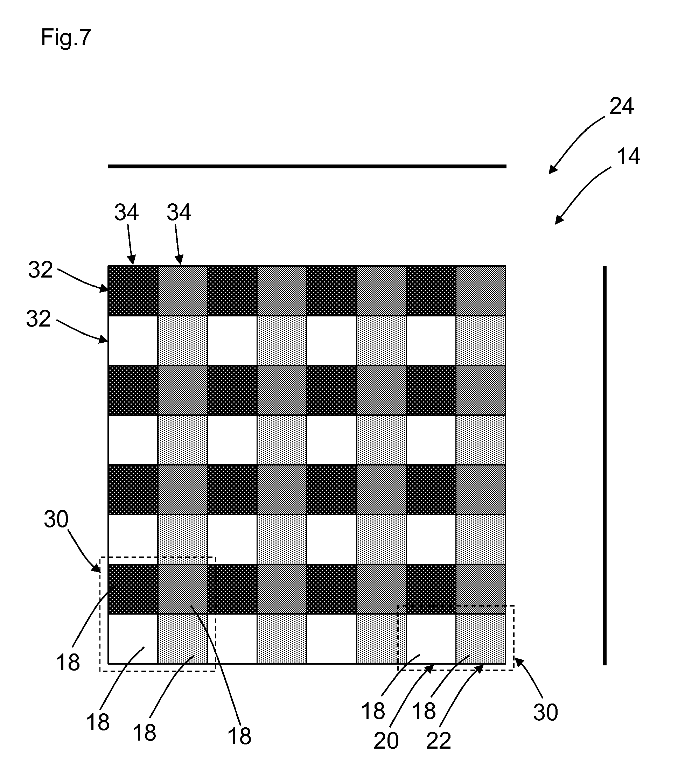

Figur 7 zeigt ein Filterarray 24 in drei verschiedenen Ansichten, nämlich in zwei Seitenansichten und einer Draufsicht. Das Filterarray 24 ist ein zusätzliches optisches Element 14, das sich unmittelbar über dem Bildsensor befindet und die Aufgabe hat, das Licht abhängig von der Position auf dem Bildsensor unterschiedlich abzuschwächen bzw. unterschiedlich zu dämpfen. Die Lichtempfangselemente, bzw. Bildpunkte bzw. Pixel in einer lokalen Nachbarschaft werden dadurch für unterschiedliche Helligkeitsbereiche verwendet. Beispielsweise weisen die unterschiedlichen Filterelemente 18 unterschiedliche Grauwerte auf.

Korrespondieren beispielsweise vier benachbarte Lichtempfangselemente mit Filterelementen 18 verschiedener optischer Dichten bzw. verschiedener optischer Dämpfungen, so kann der Dynamikbereich unabhängig von der Dynamik des Bildsensors, um beispielsweise vier Größenordnungen bzw. Dekaden vergrößert werden, je nachdem wie unterschiedlich die verschiedenen optischen Dichten der unterschiedlichen Filterelemente 18 gewählt sind.

Dabei erfolgt bei den Filterelementen 18 ein Auflösungsverlust des Bildsensors, da zumindest jeweils zwei Lichtempfangselemente 8 einen identischen Objektpunkt abbilden.

Gemäß Figur 7 sind die Filterelemente 18 einer Gruppe 30 in einer rechteckigen Fläche aus mindestens vier Filterelementen 18 angeordnet. Dadurch wird quasi ein flächenmäßig vierfach größerer Pixel gebildet, der jedoch durch die vier mit jeweils unterschiedlicher Dämpfung ausgebildeten Filterelemente 18 eine vierfach höhere Dynamik bietet.

Beispielsweise bildet mindestens ein erstes Filterelement 20 und mindestens ein zweites Filterelement 22 eine Gruppe 30. Das erste Filterelement 20 ist dabei einem ersten Lichtempfangselement zugeordnet und das zweite Filterelement 22 einem zweiten Lichtempfangselement. Die Lichtempfangselemente die der Gruppe 30 von Filterelementen 18 zugeordnet sind bilden einen kombinierten Bildpunkt mit einem hochdynamischen Bereich auch High-Dynamic-Rang Pixel oder HDR-Pixel genannt.

Beispielsweise sind die Filterelemente 18 einer Gruppe 30 in einer Zeile 32 und/oder einer Spalte 34 angeordnet. Sind die Filterelemente 18 nur jeweils in einer Zeile 32 oder nur jeweils in einer Spalte 34 angeordnet, so ist der Auflösungsverlust in einer Vorzugsrichtung vermieden und tritt nur in der Richtung auf, in der die Filterelemente 18 in einer Gruppe 30 angeordnet sind.

Sind die Filterelemente 18 einer Gruppe 30 in jeweils einer Zeile 32 und jeweils einer Spalte 34 angeordnet, so kann beispielsweise ein räumlich kompakter quadratischer oder rechteckiger Bereich für die Gruppe 30 gebildet werden, so dass quasi verhältnismäßig größere Bildpunkte bzw. Pixel mit einem hochdynamischen Bereich gebildet werden. Jedoch sind auch andere Formen der Gruppen 30 möglich. So ist es denkbar, dass die Filterelemente 18 beispielsweise L-förmig angeordnet werden, wodurch der Auflösungsverlust im Vergleich zu rechteckigen oder quadratischen Strukturen vermieden wird.

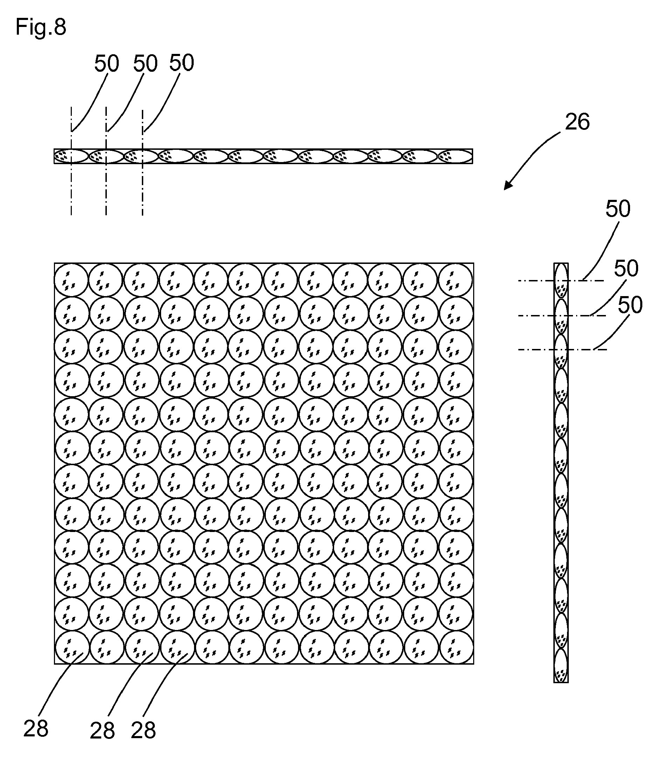

Figur 8 zeigt eine Facettenoptik 26 in drei verschiedenen Ansichten, nämlich in zwei Seitenansichten und einer Draufsicht. Durch die Facettenoptik 26 mit jeweils einzelnen Linsen 28 für mindestens je ein Lichtempfangselement wird ein Übersprechen, also eine Abbildung verschiedener Objektpunkte auf ein einziges Lichtempfangselement vermieden. Dabei weist jede Linse 28 der Facettenoptik 26 eine eigene optische Achse 50 auf. Die optischen Achsen 50 der Linsen 28 sind dabei vorzugsweise parallel zueinander ausgerichtet. Jedoch können die optischen Achsen auch jeweils in einem Winkel zueinander angeordnet sein. Dabei kann es von Vorteil sein, unterschiedliche Blickwinkel durch eine Facettenoptik auf benachbarte Lichtempfangselemente bzw. Pixel abzubilden. Die Linsen 28 der Facettenoptik 26 liegen dabei beispielsweise in einer gemeinsamen Ebene. Durch die Linsen 28 der Facettenoptik 26 erfolgt eine optische Kanaltrennung zwischen den der jeweiligen Linsen 28 jeweils zugeordneten Lichtempfangselementen.

Die Facettenoptik 26 mit den einzelnen Linsen 28 hat den Vorteil, dass diese ein sehr kleines Volumen gegenüber einer klassischen einzigen großen Linse hat. Insbesondere ist die Facettenoptik 26 flacher ausgebildet als eine einzige große Linse.

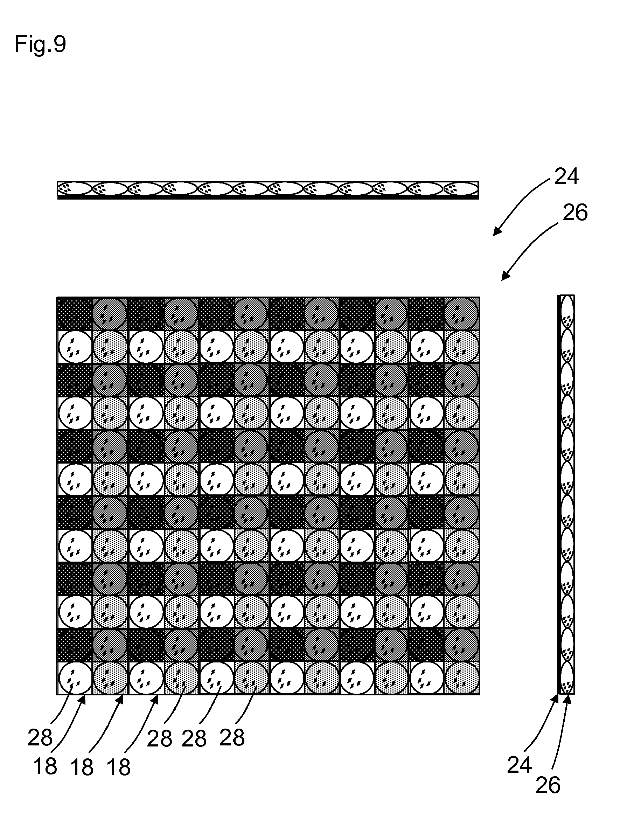

Figur 9 zeigt ein Filterarray 24 und eine Facettenoptik 26 in drei verschiedenen Ansichten, nämlich in zwei Seitenansichten und einer Draufsicht. Dabei ist je ein Filterelement 18 des Filterarrays 24 je einer Linse 28 der Facettenoptik 26 zugeordnet.

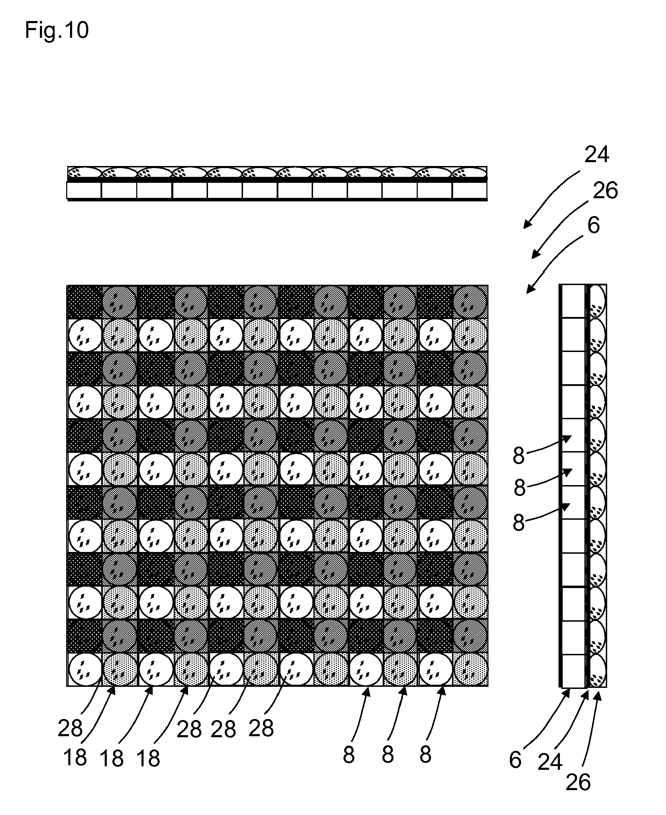

Figur 10 zeigt ein Filterarray 24, eine Facettenoptik 26 und ein Bildsensor 6 in drei verschiedenen Ansichten, nämlich in zwei Seitenansichten und einer Draufsicht. Dabei ist je ein Filterelement 18 des Filterarrays 24 je einer Linse 28 der Facettenoptik 26 und je einem Lichtempfangselement 8 des Bildsensors 6 zugeordnet.

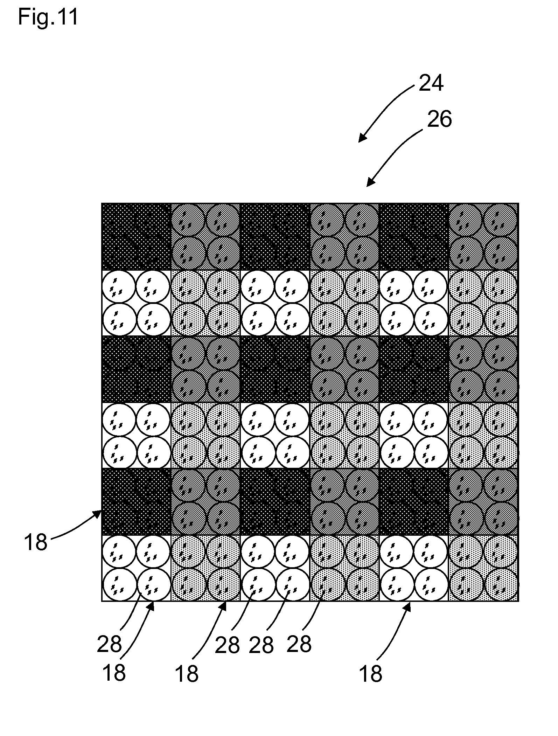

Figur 11 zeigt ein Filterarray 24 und eine Facettenoptik 26, wobei je einem Filterelement 18 des Filterarrays 24 jeweils vier Linsen 28 der Facettenoptik 26 zugeordnet sind.

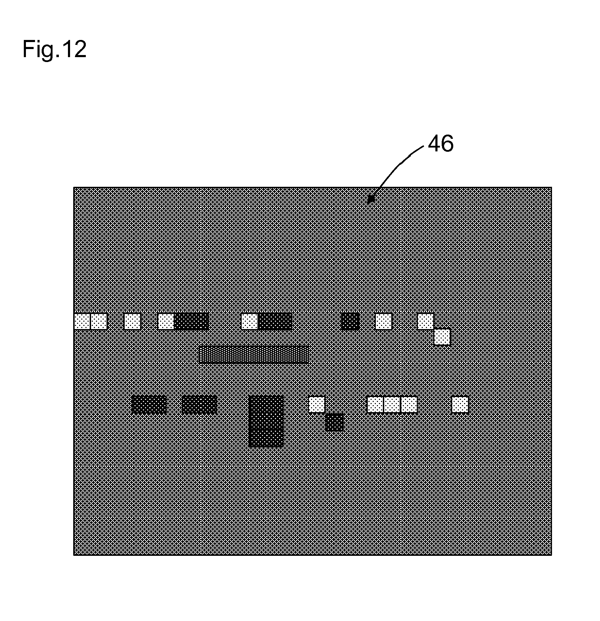

Figur 12 zeigt eine Abbildung 46 des Bildsensors gemäß der Erfindung. Die Abbildung 46 enthält keinen übersteuerten Bildbereich und auch kein Geisterbild. Die Abbildung 46 enthält nur noch gültige Entfernungsmesswerte.

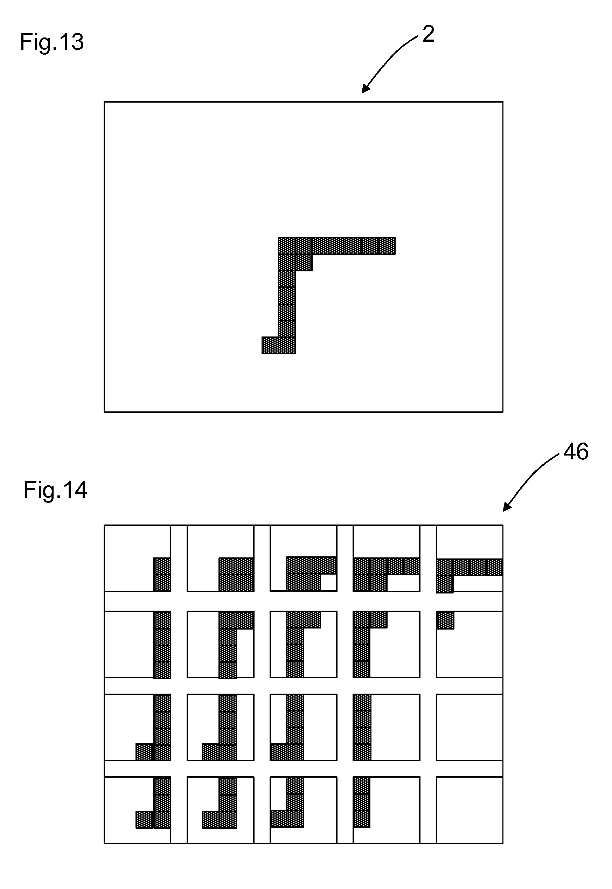

Figur 13 zeigt ein Objekt, das durch den Bildsensor abgebildet werden soll. Figur 14 zeigt eine redundante Abbildung des Objektes gemäß Figur 13 des Bildsensors gemäß der Erfindung. Dabei sind die einzelnen Bildbereiche überlappend, so dass jeder Objektpunkt mindestens zweimal abgebildet wird.

### Bezugszeichen:

- 1: Optoelektronischer Sensor
- 2: Objekt
- 4: Überwachungsbereich
- 5: Lichtempfänger
- 6: Bildsensor
- 8: Lichtempfangselement
- 10: Empfangssignale
- 12: Auswerteeinheit
- 14: erstes optisches Element
- 16: zweites optisches Element
- 18: Filterelement
- 20: erstes Filterelement
- 22: zweites Filterelement
- 24: Filterarray
- 26: Facettenoptik
- 28: Linsen
- 30: Gruppe
- 32: Zeile
- 34: Spalte
- 36: Lichtempfangselementgruppe
- 38: Objektpunkt
- 40: Einzelphotonenlawinendiode
- 42: Geisterbild
- 44: übersteuerter Bildbereich
- 46: Abbildung
- 48: Abbildung
- 50: optische Achse

## Patentansprüche

1. Optoelektronischer Sensor zur Entfernungsmessung von Objekten (2) in einem Überwachungsbereich (4) nach einem Lichtlaufzeitverfahren, mit einem Lichtempfänger (5) zum Empfangen von Licht aus dem Überwachungsbereich (4) und zur Ausgabe von Empfangssignalen (10), und einer Auswerteeinheit (12) zum Bestimmen der Lichtlaufzeit aus den Empfangssignalen (10),
wobei der Lichtempfänger (5) ein Bildsensor (6) ist mit einer Vielzahl von Lichtempfangselementen (8), welche in einer Matrix flächig angeordnet sind, **dadurch gekennzeichnet, dass**
vor wenigstens einem Lichtempfangselement (8) ein erstes optisches Element (14) angeordnet ist, wobei das erste optische Element (14) ein Filterelement (18) eines Filterarray (24) aufweist, wobei mindestens jeweils erste Filterelemente (20) und mindestens jeweils zweite Filterelemente (22) unterschiedliche optische Dämpfungen aufweisen
und/oder das erste optische Element (14) eine Linse (28) einer Facettenoptik (26) aufweist, wobei die Facettenoptik (26) eine Vielzahl von Linsen (28) aufweist, wobei jeweils eine Linse (28) mindestens jeweils einem Lichtempfangselement (8) zugeordnet ist.

2. Optoelektronischer Sensor nach Anspruch 1, **dadurch gekennzeichnet, dass** mindestens ein erstes Filterelement (20) und mindestens ein zweites Filterelement (22) eine Gruppe (30) bilden.

3. Optoelektronischer Sensor nach einem der vorhergehenden Ansprüche,
**dadurch gekennzeichnet, dass** die Filterelemente (18) einer Gruppe (30) in einer Zeile und/oder einer Spalte angeordnet sind.

4. Optoelektronischer Sensor nach einem der vorhergehenden Ansprüche,
**dadurch gekennzeichnet, dass** das die Filterelemente (18) einer Gruppe (30) in einer rechteckigen Fläche aus mindestens vier Filterelementen (18) angeordnet sind.

5. Optoelektronischer Sensor nach einem der vorhergehenden Ansprüche,
**dadurch gekennzeichnet, dass** mindestens zwei Lichtempfangselemente (8) eine Lichtempfangselementgruppe (36) bilden, wobei jeweils eine einzige Linse (28) der Facettenoptik (26) jeweils einer Lichtempfangselementgruppe (36) zugeordnet ist.

6. Optoelektronischer Sensor nach einem der vorhergehenden Ansprüche, **dadurch gekennzeichnet, dass** die Facettenoptik dazu ausgebildet ist, einen einzigen Objektpunkt auf mindestens zwei unterschiedliche Lichtempfangselemente abzubilden, wodurch eine redundante Abbildung erfolgt.

7. Optoelektronischer Sensor nach einem der vorhergehenden Ansprüche, **dadurch gekennzeichnet, dass** das erste optische Element (14) eine Linse (28) einer Facettenoptik (26) ist, wobei die Facettenoptik (26) eine Vielzahl von Linsen (28) aufweist, wobei je eine Linse (28) je einem einzigen Lichtempfangselement (8) zugeordnet ist.

8. Optoelektronischer Sensor nach einem der vorhergehenden Ansprüche, **dadurch gekennzeichnet, dass** das Lichtempfangselement (8) mindestens eine Einzelphotonenlawinendiode (40) aufweist.

9. Optoelektronischer Sensor nach einem der vorhergehenden Ansprüche, **dadurch gekennzeichnet, dass** vor dem Bildsensor (6) ein schmalbandiges Interferenzfilter angeordnet ist.
